# EUROPEAN PATENT APPLICATION

(11) **EP 4 803 405 A1**
(43) Date of publication of application: **09.09.2026**
(21) Application number: 26159622.5
(22) Date of filing: 19.02.2026
(51) Int. Cl.: B62D 21/15, B60K 1/04, B62D 25/02, B62D 25/20

(54) **VEHICLE SIDE SECTION STRUCTURE**

(30) Priority: 04.03.2025 JP 2025033833
(71) Applicant: Toyota Jidosha Kabushiki Kaisha, Toyota-shi, Aichi-ken 471-8571 (JP)
(72) Inventor: FUCHI, Kosuke, TOYOTA-SHI, AICHI-KEN, 471-8571 (JP); HIROTA, Akihiro, TOYOTA-SHI, AICHI-KEN, 471-8571 (JP)
(74) Representative: Cabinet Beau de Loménie

(57) **Abstract**

A vehicle side section structure (10) including: a vehicle side section member (44, 46) provided at a vehicle width direction outside and extending in a vehicle front-rear direction; and plural cross members (20, 22, 24, 26) extending in the vehicle width direction, the vehicle side section member (44, 46) including: an outer member (44) provided at the vehicle width direction outside, and an inner member (46) provided at the vehicle width direction inside, wherein a rigidity of one member from out of the outer member (44) and the inner member (46) is higher than the rigidity of the other member, and wherein the higher rigidity member of the outer member (44) or the inner member (46) is disposed so as to overlap with the plurality of cross members (20, 22, 24, 26) in vehicle side view.

## Description

### BACKGROUND

### Technical Field

The present disclosure relates to a vehicle side section structure.

### Related Art

Japanese Patent Application Laid-Open (JP-A) No. 2018-188086, discloses a vehicle having a battery disposed below a floor panel in a configuration in which crash load from a vehicle side impact (hereinafter simply referred to as a "side impact") is absorbed by a box-shaped bulkhead disposed inside a side shell so as to overlap with a floor cross member in vehicle side view.

However, in the technology disclosed in JP-A No. 2018-188086, the bulkhead inside the side shell is disposed only at positions overlapping with the floor cross member in vehicle side view. This means that load is not able to be sufficiently transmitted to the floor cross member in cases in which localized load, such as from a pole side impact, is imparted to a position lacking the bulkhead, with this leading to the possibility of the side shell intruding toward the vehicle width direction inside and crash load being imparted to the battery.

### SUMMARY

The present disclosure provides a vehicle side section structure that may efficiently transmitting side impact load, which has been input to a vehicle side during a side impact, to plural cross members.

A first aspect of the present disclosure is a vehicle side section structure including: a vehicle side section member provided at a vehicle width direction outside and extending in a vehicle front-rear direction; and plural cross members extending in the vehicle width direction, the vehicle side section member including: an outer member provided at the vehicle width direction outside, and an inner member provided at the vehicle width direction inside, wherein a rigidity of one member from out of the outer member and the inner member is higher than the rigidity of the other member, and wherein the higher rigidity member of the outer member or the inner member is disposed so as to overlap with the plurality of cross members in vehicle side view.

In the vehicle side section structure of the first aspect, from out of the outer member and the inner member configuring each of the left-right pair of vehicle side section members extending in the vehicle front-rear direction, the higher rigidity member is disposed such that part thereof overlaps in vehicle side view with the plural cross members extending in the vehicle width direction. Load that is input to the vehicle side section member during a side impact may thereby be distributed to the plural cross members, enabling side impact load to be absorbed efficiently.

In a second aspect of the present disclosure, in the first aspect, the lower rigidity member of the outer member or the inner member may be disposed so as to overlap with the plurality of cross members in a vehicle height direction.

In the vehicle side section structure of the second aspect, the lower rigidity member from out of the outer member and the inner member is disposed so as to overlap with the plural cross members in vehicle side view. A reaction force from the plural cross members is accordingly transmitted to the lower rigidity member during a side impact. This may enable crash energy to be absorbed efficiently during a side impact by compressional deformation of the lower rigidity member.

In a third aspect of the present disclosure, in the second aspect, the outer member may have a higher rigidity than the inner member.

In the vehicle side section structure of the third aspect, the outer member has a higher rigidity than the inner member in the vehicle side section member. The outer member accordingly distributes side impact load over a wide range along the vehicle front-rear direction during a side impact and plastically deforms the inner member over a wide range. This may enable crash energy to be absorbed more efficiently.

In a fourth aspect of the present disclosure, in the third aspect, the vehicle side section member may be provided inside each of a left-right pair of rockers that are provided at the vehicle width direction outside and that extend in the vehicle front-rear direction.

In the vehicle side section structure of the fourth aspect, the vehicle side section member is provided inside the rocker. This may enable transmission and absorption of crash energy during a side impact by both the rocker and the vehicle side section member.

In a fifth aspect of the present disclosure, in the fourth aspect, the rocker may include a rocker outer provided at the vehicle width direction outside, and a rocker inner provided at the vehicle width direction inside, the rocker may further include a partition member provided between the rocker outer and the rocker inner, the outer member may be provided to the partition member so as to be disposed between the rocker outer and the partition member, and the inner member may be provided to the partition member so as to be disposed between the rocker inner and the partition member.

In the vehicle side section structure of the fifth aspect, the outer member and the inner member are provided to the partition member gripped between the rocker inner and the rocker outer. This may enable vehicle height direction deformation of the outer member and the inner member to be suppressed during a side impact, and may enable transmission efficiency of side impact load by the outer member to the plural cross members to be raised.

In a sixth aspect of the present disclosure, in the fifth aspect, the outer member may include a first projection that extends along the vehicle front-rear direction and that projects toward the vehicle width direction outside, and the first projection may be disposed so as to overlap with the plural cross members in vehicle side view.

In the vehicle side section structure of the sixth aspect, the first projection that projects to the vehicle width direction outside is disposed so as to overlap with the plural cross members in the vehicle height direction. The side impact load input to the rocker during a side impact is accordingly firstly transmitted to the first projection that projects to the vehicle outside. Due to the first projection being disposed so as to overlap with the plural cross member in the vehicle height direction, the side impact load may be distributed efficiently to the plural cross members.

In a seventh aspect of the present disclosure, in the sixth aspect, the inner member may include a second projection that extends along the vehicle front-rear direction and that projects toward the vehicle width direction inside, and the second projection may be disposed so as to overlap with the plurality of cross members in vehicle side view.

In the vehicle side section structure of the seventh aspect of the present disclosure the second projection that projects to the vehicle width direction inside is disposed so as to overlap with the plural cross members in vehicle height direction. This means that when side impact load input to the rocker during a side impact is transmitted to the second projection that projects toward the vehicle inside, the side impact load may be distributed efficiently to the plural cross members due to the second projection being disposed so as to overlap with the plural cross members in the vehicle height direction.

In an eighth aspect of the present disclosure, in the sixth aspect, the first projection may include, a first side wall that extends in the vehicle height direction, a first upper wall that extends in the vehicle width direction from an upper end portion of the first side wall, and a first lower wall that extends in the vehicle width direction from a lower end portion of the first side wall, the first upper wall may be disposed so as to overlap in the vehicle height direction with upper faces of the plural cross members, and the first lower wall may be disposed so as to overlap in the vehicle height direction with lower faces of the plural cross members.

In the vehicle side section structure of the eight aspect, the first upper wall of the first projection is disposed so as to overlap with the upper faces of the plural cross members, and the first lower wall of the first projection is disposed so as to overlap with the lower faces of the plural cross members. The heights in the vehicle height direction of the plural cross members and the first projection substantially match each other. This may enable the transmission efficiency of side impact load to be raised.

In a ninth aspect of the present disclosure, in the seventh aspect, the second projection may include, a second side wall that extends in the vehicle height direction, a second upper wall that extends in the vehicle width direction from an upper end portion of the second side wall, and a second lower wall that extends in the vehicle width direction from a lower end portion of the second side wall, the second upper wall may be disposed so as to overlap in the vehicle height direction with upper faces of the plural cross members, and the second lower wall may be disposed so as to overlap in the vehicle height direction with lower faces of the plural cross members.

In the vehicle side section structure of the ninth aspect, the second upper wall of the second projection is disposed so as to overlap with the upper faces of the plural cross members, and the second lower wall of the second projection is disposed so as to overlap with the lower faces of the plural cross members. The heights in the vehicle height direction of the plural cross members and the second projection thereby substantially match each other. This may enable reaction force from the plural cross members to be transmitted efficiently to the second projection, and may enable absorption efficiency of crash energy to be raised by the second projection.

In a tenth aspect of the present disclosure, in the ninth aspect, the first side wall in the first projection extending in the vehicle height direction may be disposed substantially parallel to a side wall of the rocker outer opposing in the vehicle width direction, and the second side wall of the second projection may be disposed substantially parallel to a side wall of the rocker inner opposing in the vehicle width direction.

In the vehicle side section structure of the tenth aspect, the first side wall of the first projection is disposed substantially parallel to the side wall of the rocker outer, and the second side wall of the second projection is disposed substantially parallel to the side wall of the rocker inner. The load transmission efficiency from the rocker outer to the first projection may accordingly be raised, and also the load transmission efficiency from the second projection to the rocker inner may be raised.

In an eleventh aspect of the present disclosure, in the eighth aspect, the first upper wall of the first projection may include an upper projection that projects toward the vehicle height direction upper side, plural upper projections maybe provided spaced apart with intervals in the vehicle front-rear direction, the first lower wall of the first projection may include a lower projection that projects toward the vehicle height direction lower side, and plural lower projections maybe provided spaced apart at intervals in the vehicle front-rear direction.

In the vehicle side section structure of the eleventh aspect, the first upper wall and the first lower wall of the first projection include plural projections spaced apart from each other at intervals along the vehicle front-rear direction. The rigidity to side impact load may accordingly be raised, and the load transmission efficiency to the plural cross members may be raised.

In a twelfth aspect of the present disclosure, in the eleventh aspect, the upper projections and the lower projections may be disposed so as to respectively overlap in the vehicle height direction with each other in vehicle side view.

In the vehicle side section structure of the twelfth aspect, the upper projections and the lower projections overlap in the vehicle height direction. This may enable the rigidity to side impact load to be raised more.

In a thirteenth aspect of the present disclosure, in any one of the fourth to the twelfth aspect, the inner member may be configured divided into plural divisions that are disposed separated from each other along the vehicle front-rear direction and may be disposed so as to respectively overlap in the vehicle front-rear direction with the plurality of cross members in vehicle side view.

In the vehicle side section structure of the thirteenth aspect, the inner member is provided only at positions overlapping with the plural cross members. Due to the inner member only being provided at positions overlapping with the plural cross members, residual uncrushed portions of the rocker can be reduced in cases in which a side impact load is input between cross members, such as in a pole side impact in particular. This may enable crash load to be suppressed from being imparted to the battery.

In a fourteenth aspect of the present disclosure, in the third aspect, the outer member may be configured from a material having a higher rigidity than the inner member.

In the vehicle side section structure of the fourteenth aspect, the outer member is configured from a material having a higher rigidity than the inner member. Due to the rigidity of the outer member accordingly being high, and the rigidity of the inner member being low, the outer member distributes side impact load over a wide range along the vehicle front-rear direction. This may enable the inner member to be plastically deformed over a wide range.

In a fifteenth aspect of the present disclosure, in the third aspect, a plate thickness of the outer member may be thicker than a plate thickness of the inner member.

In the vehicle side section structure of the fifteenth aspect, the plate thickness of the outer member is thicker than the plate thickness of the inner member. Due to the rigidity of the outer member accordingly being high and the rigidity of the inner member being low, the outer member distributes side impact load over a wide range along the vehicle front-rear direction. This may enable the inner member to be plastically deformed over a wide range.

Due to the above aspects, the vehicle side section structure of the present disclosure may transmit side impact load to the plural cross members, and may enable side impact load to be absorbed efficiently.

### BRIEF DESCRIPTION OF THE DRAWINGS

Exemplary embodiments will be described in detail based on the following figures, wherein:
Fig. 1 is a plan view of a vehicle applied with a vehicle side section structure according to a first exemplary embodiment;
Fig. 2 is a cross-sectional view sectioned along line 1-1 of Fig. 1;
Fig. 3 is a cross-sectional view illustrating a state in which a crash load has been input to a rocker of a vehicle applied with a vehicle side section structure according to the first exemplary embodiment;
Fig. 4 is a perspective view illustrating a vehicle side section member applied with a vehicle side section structure according to the first exemplary embodiment;
Fig. 5 is a plan view of a vehicle applied with a vehicle side section structure according to a second exemplary embodiment; and
Fig. 6 is a perspective view illustrating a vehicle side section member applied with a vehicle side section structure according to the second exemplary embodiment.

### DETAILED DESCRIPTION

Description follows regarding a vehicle side section structure according to an exemplary embodiment of the present disclosure, with reference to the drawings. Note that as appropriate in each of the drawings arrow FR, arrow UP, arrow RH respectively indicate forward, upward, and rightward directions of a vehicle applied with a vehicle side section structure according to an exemplary embodiment of the present disclosure.

### First Exemplary Embodiment

### Vehicle Side Section Structure Configuration

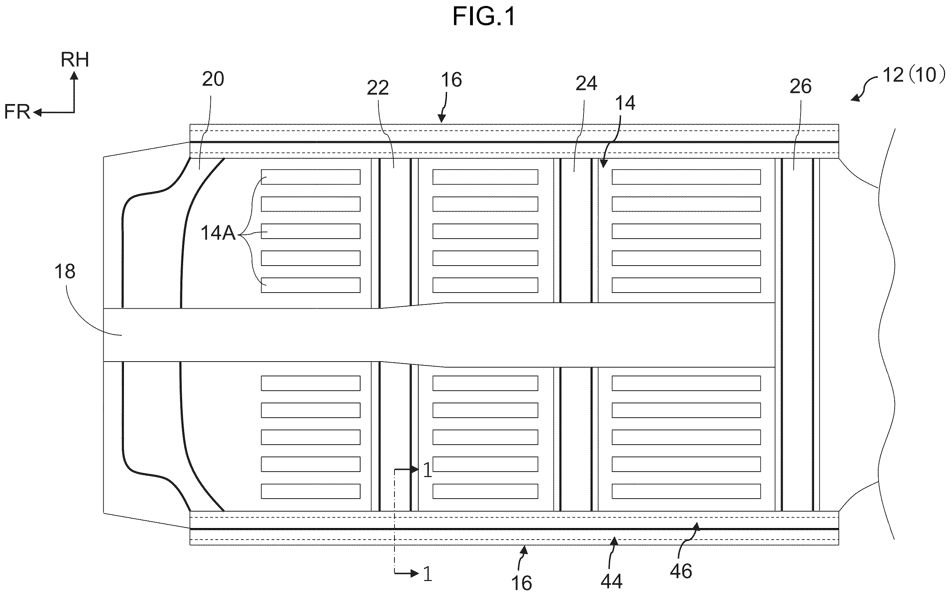

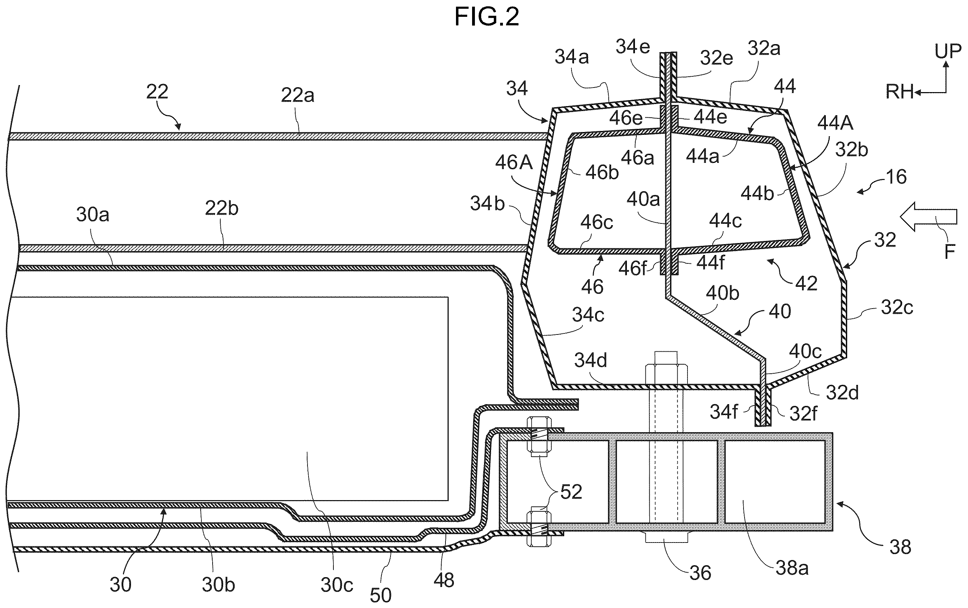

First description follows regarding a configuration of a vehicle lower section structure according to the present exemplary embodiment. Fig. 1 illustrates a plan view of a vehicle lower section 12 applied with a vehicle side section structure according to the present exemplary embodiment, and Fig. 2 illustrates a cross-section sectioned along line 1-1 of Fig. 1.

The vehicle 10 is, for example, an electric vehicle, a gasoline hybrid vehicle, a fuel cell hybrid vehicle, or the like that travels using an electric motor (motor) as a drive source, and that includes a battery 30 for storing power for supply to a power unit such as a motor, with the battery installed at a vehicle height direction lower side of a floor panel 14 configuring a vehicle floor.

As illustrated in Fig. 1, the floor panel 14 configuring the vehicle floor includes plural beads 14A are provided running along the vehicle front-rear direction so as to project intermittently along the vehicle front-rear direction, with plural of these projecting beads 14A arrayed along the vehicle width direction. The rigidity of the floor panel 14 is raised due to forming these beads 14A.

A left-right pair of rockers 16 respectively extend along the vehicle front-rear direction at each vehicle width direction end of the floor panel 14, and plural cross members are provided on the floor panel 14 so as to run along the vehicle width direction between the left-right pair of rockers 16. The plural cross members are separated from each other in the vehicle front-rear direction. The plural cross members are, as listed from the vehicle front, a dashboard cross member 20, a first seat cross member 22, a second seat cross member 24, and a floor cross member 26.

Note that the first seat cross member 22 and the second seat cross member 24 are each disposed between beads 14A and beads 14A respectively adjacently disposed along the vehicle front-rear direction.

A floor tunnel 18 projecting toward a vehicle cabin inside extends along the vehicle front-rear direction at a left-right vehicle width direction central portion of the floor panel 14. The floor tunnel 18 houses a propeller shaft or the like to transmit motive force of an engine or the like to vehicle wheels.

As illustrated in Fig. 2, the battery 30 is disposed at a lower side of the floor panel 14 as a motive force supply device to supply enteric power to a power unit such as a motor.

The battery 30 is configured including an upper case 30a, a lower case 30b, and a battery module 30c.

As stated above, the left-right pair of rockers 16 are respectively provided at the vehicle width direction ends of the floor panel 14 and extend along the vehicle front-rear direction. The rockers 16 are each configured including a rocker outer 32 positioned at the vehicle width direction outside, and a rocker inner 34 positioned at the vehicle width direction inside. The rockers 16 are each, for example, molded from a metal such as steel or the like.

The rocker outer 32 is formed in a substantially hat shape in cross-section profile sectioned along the vehicle width direction. The rocker outer 32 is configured including a rocker outer upper wall 32a that is inclined toward the lower side on progression toward the vehicle width direction outside, a rocker outer upper vertical wall 32b that is inclined toward the lower side on progression toward the vehicle width direction outside and is provided at a lower side of the rocker outer upper wall 32a, a rocker outer lower vertical wall 32c that is inclined toward the lower side on progression toward the vehicle width direction inside and is provided at a lower side of the rocker outer upper vertical wall 32b, and a rocker outer lower wall 32d that is inclined toward the lower side on progression toward the vehicle width direction inside and is provided at a lower side of the rocker outer lower vertical wall 32c.

The rocker outer 32 also includes a rocker outer upper flange 32e that extends from a vehicle width direction inside end portion of the rocker outer upper wall 32a toward the vehicle height direction upper side, and a rocker outer lower flange 32f that extends from a vehicle width direction inside end portion of the rocker outer lower wall 32d toward the vehicle height direction lower side.

The rocker inner 34 is formed in a substantially hat shape in cross-section profile sectioned along the vehicle width direction. The rocker inner 34 is configured including a rocker inner upper wall 34a that is inclined toward the lower side on progression toward the vehicle width direction inside, a rocker inner upper vertical wall 34b that is inclined toward the lower side on progression toward the vehicle width direction inside and is provided at a lower side of the rocker inner upper wall 34a, a rocker inner lower vertical wall 34c that is inclined toward the lower side on progression toward the vehicle width direction outside and is provided at a lower side of the rocker inner upper vertical wall 34b, and a rocker inner lower wall 34d that is provided running substantially along the vehicle width direction at a lower side of the rocker inner lower vertical wall 34c.

The rocker inner 34 also includes a rocker inner upper flange 34e that extends from a vehicle width direction outside end portion of the rocker inner upper wall 34a toward the vehicle height direction upper side, and a rocker inner lower flange 34f that extends from a vehicle width direction outside end portion of the rocker inner lower wall 34d toward the vehicle height direction lower side.

A fastener 36 is insertable through the rocker inner lower wall 34d so as to enable a shock absorption member 38, described later, to be fixed to the rocker 16 by the fastener 36. Note that the fastener 36 is, for example, a bolt and a weld nut.

The rocker outer 32 and the rocker inner 34 are disposed so as to oppose each other in the vehicle width direction, with the upper flanges 32e, 34e and the lower flanges 32f, 34f respectively coupled together by welding or the like, with a share panel (partition member) 40, described later, interposed therebetween. A closed cross-section structure is accordingly configured by the rocker outer 32 and the rocker inner 34.

The rocker outer 32 is set with a rigidity higher than that of the rocker inner 34. The rocker outer 32 is formed with the plate thickness of the rocker outer 32 thicker than the plate thickness of the rocker inner 34. The rocker outer 32 may thereby be suppressed from deforming under input of side impact load F, enabling the side impact load F to be transmitted to plural cross members. Moreover, the rocker inner 34 has a lower rigidity than that of the rocker outer 32, and so is capable of absorbing crash energy by compressional deformation when bearing a reaction force from the plural cross members due to input of the side impact load F.

Note that the rocker outer 32 may be formed from a material having a higher rigidity than that of the rocker inner 34. In such cases the rocker outer 32 may, for example, be formed from an ultrahigh strength steel, and the rocker inner 34 on the other hand may be formed from a steel. However, the rocker outer 32 and the rocker inner 34 are not limited to being formed from these materials.

The rockers 16 may, for example, be formed from a metal such as an aluminum alloy or the like. In such cases, the rocker outer 32 and the rocker inner 34 are integrally formed by extrusion molding, draw molding, or the like so as form a closed cross-section.

The first seat cross member 22 spanning between the pair of rockers 16 is connected to the rocker inner upper vertical wall 34b of the rocker inner 34. The first seat cross member 22 may, for example, be connected to the rocker inner upper vertical wall 34b through a load transmitting member or the like.

Moreover, as stated above, the share panel 40 extends along the vehicle height direction at the inside of the closed cross-section of the rocker 16, clamped between the upper flanges 32e, 34e and the lower flanges 32f, 34f. The share panel 40 is, for example, formed from a metal having a high rigidity such as an ultrahigh strength steel or the like.

The share panel 40 is configured including an upper share panel 40a provided with a vehicle height direction upper portion clamped by the upper flanges 32e, 34e of the rocker 16, a central share panel 40b that provided at a lower side of the upper share panel 40a and is inclined toward the lower side on progression toward the vehicle outside, and a lower share panel 40c provided along the vehicle height direction at a lower side of the central share panel and clamped by the lower flanges 32f, 34f of the rocker 16. The upper share panel 40a, the central share panel 40b, and the lower share panel 40c may be integrally formed.

A vehicle side section member 42 configured from an outer member 44 and an inner member 46, described later, is provided to the upper share panel 40a of the share panel 40.

As described above, the outer member 44 is attached to a face on the vehicle outside direction of the upper share panel 40a. The outer member 44 is formed in a substantially hat shape in cross-section profile sectioned along the vehicle width direction. The outer member 44 is, for example, formed from a metal such as an aluminum alloy or the like. The outer member 44 is configured including an outer member upper wall (first upper wall) 44a provided substantially along the vehicle width direction, an outer member vertical wall (first side wall) 44b that is provided at a lower side of the outer member upper wall and is inclined toward the lower side on progression toward the vehicle width direction outside, and an outer member lower wall (first lower wall) 44c that is provided substantially along the vehicle width direction at a lower side of the outer member vertical wall 44b.

The outer member 44 forms a first projection 44A that projects toward the vehicle outside by the outer member upper wall 44a, the outer member vertical wall 44b, and the outer member lower wall 44c. The first projection 44A is disposed so as to overlap in the vehicle height direction with plural cross members including the first seat cross member 22. However, the first projection 44A may be disposed such that at least part thereof overlaps in the vehicle height direction with plural cross members including the first seat cross member 22. Moreover, the first projection 44A may be configured so as to overlap with at least two cross members from out of the plural cross members. This thereby enables the side impact load F to be transmitted to the plural cross members efficiently.

The outer member upper wall 44a is disposed so as to overlap in the vehicle height direction with an upper face 22a of the first seat cross member 22. The outer member vertical wall 44b is disposed substantially parallel to the rocker outer upper vertical wall 32b. Furthermore, the outer member lower wall 44c is disposed so as to overlap in the vehicle height direction with a lower face 22b of the first seat cross member 22. However, the outer member upper wall 44a may be disposed such that at least a portion thereof overlaps with an upper face of each of the plural cross members including the first seat cross member. Moreover, the outer member lower wall 44c may be disposed so as to overlap with ridge lines that form respective lower faces of at least two or more cross members from out of the plural cross members. The vehicle height direction heights of the outer member 44 and the plural cross members thereby substantially match each other, enabling the side impact load F to be transmitted to the plural cross members efficiently.

The inner member 46 is attached to a vehicle inside direction face of the upper share panel 40a. The inner member 46 is formed in a substantially hat shape in cross-section profile sectioned along the vehicle width direction. The inner member 46 is, for example, formed from a metal such as an aluminum alloy or the like. The inner member 46 is configured including an inner member upper wall (second upper wall) 46a provided substantially along the vehicle width direction, an inner member vertical wall (second side wall) 46b that is provided at a lower side of the inner member upper wall and is inclined toward the lower side on progression toward the vehicle width direction inside, and an inner member lower wall (second lower wall) 46c that is provided substantially along the vehicle width direction at a lower side of the inner member vertical wall 46b.

The inner member 46 forms a second projection 46A that projects toward the vehicle inside by the inner member upper wall 46a, the inner member vertical wall 46b, and the inner member lower wall 46c. The second projection 46A is disposed so as to overlap in the vehicle height direction with plural non-illustrated cross members including the first seat cross member 22. However, the second projection 46A may be disposed such that at least a portion thereof overlaps in the vehicle height direction with plural cross members including the first seat cross member. Moreover, the second projection 46A may overlap with at least two cross members from out of the plural cross members. This may enable reaction force from the plural cross members to be transmitted to the second projection 46A efficiently during a side impact, and may enable an absorption efficiency of crash energy to be raised by the second projection 46A.

The inner member upper wall 46a is disposed so as to overlap in the vehicle height direction with the upper face 22a of the first seat cross member 22. The inner member vertical wall 46b is disposed substantially parallel to the rocker inner upper vertical wall 34b. Furthermore, the inner member lower wall 46c is disposed so as to overlap in the vehicle height direction with the lower face 22b of the first seat cross member 22. However, the rocker inner upper wall 34a may be disposed such that at least a portion thereof overlaps with respective upper faces of plural cross members including the first seat cross member. Moreover, the inner member lower wall 46c may be disposed so as to overlap with ridge lines that form respective lower faces of at least two or more cross members from out of the plural cross members. The vehicle height direction heights of the inner member 46 and the plural cross members thereby substantially match each other, enabling reaction force from the plural cross members to be transmitted to the inner member 46 efficiently, and enabling the absorption efficiency of crash energy to be raised by inner member 46.

The first projection 44A includes an outer member upper flange 44e that extends from a vehicle width direction inside end portion of the outer member upper wall 44a toward the vehicle height direction upper side, and an outer member lower flange 44f that extends from a vehicle width direction inside end portion of the outer member lower wall 44c toward the vehicle height direction lower side.

The second projection 46A includes an inner member upper flange 46e that extends toward the vehicle height direction upper side from a vehicle width direction outside end portion of the inner member upper wall 46a, and an inner member lower flange 46f that extends to the vehicle height direction lower side from a vehicle width direction outside end portion of the inner member lower wall 46c.

The first projection 44A and the second projection 46A are disposed so as to oppose each other in the vehicle width direction, and are coupled together such as by welding the upper flanges 44e, 46e together and the lower flanges 44f, 46f together with the share panel 40 interposed therebetween. This means that, when a side impact load F is input to the vehicle side section member 42, openings of the first projection 44A and the second projection 46A deform so as to open in the vehicle height direction, but deformation can be suppressed by the tensile strength of the share panel 40.

The outer member 44 is set with a rigidity higher than that of the inner member 46. The rigidity of the outer member 44 is formed by the plate thickness of the outer member 44 being thicker than the plate thickness of the inner member 46. The outer member 44 is thereby suppressed from deforming under input of the side impact load F, enabling the side impact load F to be transmitted to the plural cross members. The inner member 46 has a lower rigidity than that of the outer member, enabling crash energy to be absorbed by compressional deformation under receipt of a reaction force from the plural cross members due to input of the side impact load F.

A shock absorption member 38 is provided below the rocker 16 and fixed to the rocker inner lower wall 34d. Moreover, fasteners 52 are insertable through the shock absorption member 38 so as to enable an upper face of the shock absorption member 38 to be fixed to a support member 48 by one of the fasteners 52, and so as to enable a lower face thereof to be fixed to a battery share panel 50. Note that the fasteners 52 are, for example, bolts and weld nuts.

Moreover, the shock absorption member 38 is disposed so as to overlap with the battery 30 in vehicle side view. The shock absorption member 38 is configured by an energy absorption section 38a contiguously provided along the vehicle front-rear direction. When side impact load F is input, the crash energy due to the side impact load F can be absorbed by plastic deformation of the energy absorption section 38a. The profile of the energy absorption section 38a is not limited to this profile. The energy absorption section 38a may, for example, be configured with a honeycomb profile or the like.

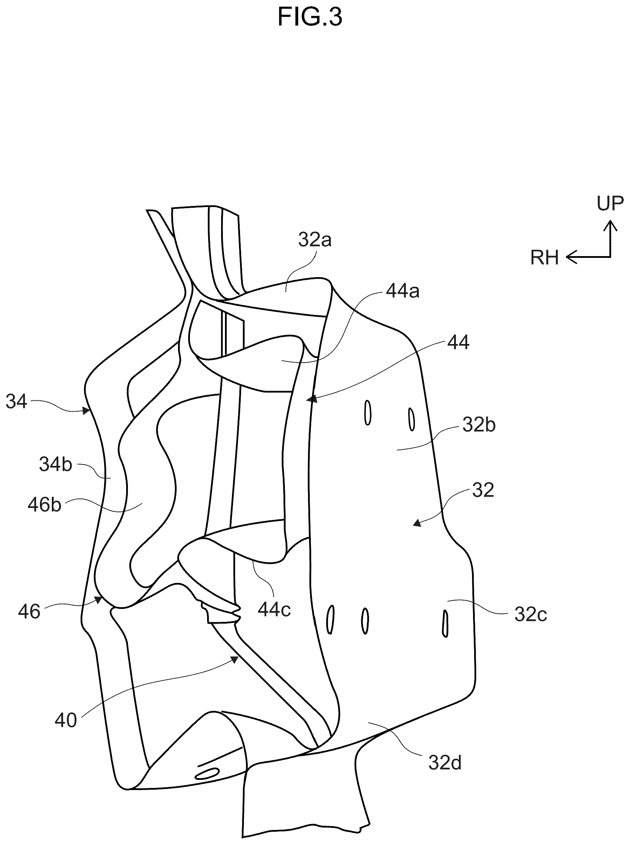

Fig. 3 illustrates a state in which side impact load F has been input to the rocker 16. The side impact load F that has been input to the rocker outer 32 is transmitted to the vehicle side section member 42 by the rocker outer upper wall 32a and the rocker outer lower wall 32d plastically deforming and the rocker outer 32 hitting the outer member 44. The outer member has a high rigidity in the vehicle side section member 42, and so the side impact load F is transmitted to the inner member 46 along a load path of the outer member upper wall 44a and the outer member lower wall 44c.

The rocker 16 is compression deformed toward the vehicle width direction inside by the side impact load F. The vehicle side section member 42 provided to the share panel 40 accordingly moves relatively toward the vehicle width direction inside with respect to the vehicle 10. Next, from out of the vehicle side section member 42 that has moved to the vehicle width direction inside, the inner member vertical wall 46b hits the non-illustrated first seat cross member 22 through the rocker inner upper vertical wall 34b. A reaction force is obtained from the first seat cross member 22, and crash energy due to the side impact load F can be absorbed by plastic deformation of the low rigidity inner member 46.

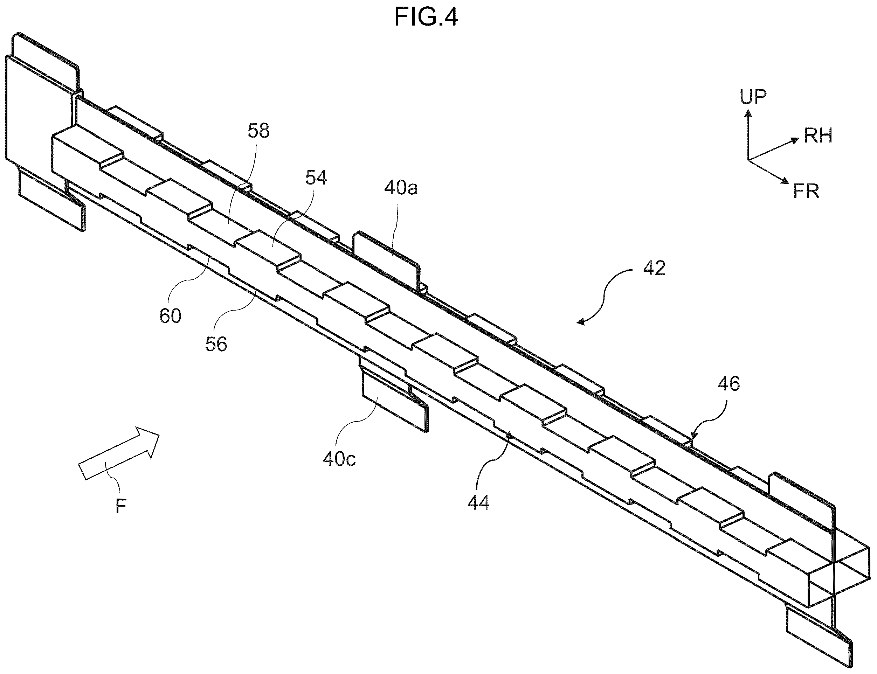

As illustrated in Fig. 4, the outer member 44 of the vehicle side section member 42 includes upper projections 54 formed projecting toward the vehicle height direction upper side in vehicle side view, with plural of the upper projections 54 provided spaced apart at intervals along the vehicle front-rear direction. Upper indentations 58, having profiles relatively indented toward the vehicle height direction lower side due to the upper projections 54, are each formed between one upper projection 54 and another upper projection 54 adjacent to each other in the vehicle front-rear direction.

The outer member 44 of the vehicle side section member 42 is formed with lower projections 56 that project toward the vehicle height direction lower side in vehicle side view, with plural of the lower projections 56 provided spaced apart at intervals in the vehicle front-rear direction. Moreover, lower indentations 60, having profiles relatively indented toward the vehicle height direction upper side due to the lower projections 56, are each formed between one lower projection 56 and another lower projection 56 adjacent to each other in the vehicle front-rear direction.

Note that the upper projections 54 and lower projections 56 are disposed so as to overlap above and below with each other in vehicle side view. This thereby enables the rigidity of the outer member 44 to the side impact load F to be raised. The inner member 46 may have a configuration similar to that of the outer member 44. Moreover, the inner member 46 and the outer member 44 may have the upper projections 54 and the lower projections 56 formed at positions so as to overlap with each other in vehicle side view, or may be formed displaced from each other in the vehicle front-rear direction. Furthermore, the heights of the upper projections 54 and the lower projections 56 may be different on the inner member 46 and the outer member 44.

### Vehicle Side Section Structure: Operation and Advantageous Effects

Next description follows regarding the operation and advantageous effects of the vehicle side section structure according to the present exemplary embodiment.

In the vehicle side section member 42 of the present exemplary embodiment, the first projection 44A of the outer member 44 and the second projection 46A of the inner member 46 are disposed so as to overlap with plural cross members in vehicle side view.

This thereby enables the side impact load F input to the vehicle side section during a side impact to be transmitted to plural cross members. The rocker 16 and the vehicle side section member 42 are plastically deformed by reaction force, obtained from the rocker 16 disposed on the opposite side to the rocker 16 that was input with the side impact load F and from the floor tunnel 18 as transmitted through the plural cross members, such that crash energy from the side impact load F is absorbed, thereby enabling crash load to be suppressed from being imparted to the battery.

Furthermore, in the vehicle side section member 42 of the present exemplary embodiment, the outer member 44 has a higher rigidity than the inner member 46.

The outer member 44 accordingly acts as a beam to distribute the side impact load F in the vehicle front-rear direction and to transmit load to the plural cross members efficiently. On the other hand, the inner member 46 plastically deforms under reaction force, obtained from the rocker 16 disposed on the opposite side to the rocker 16 that was input with the side impact load F and from the floor tunnel 18 as transmitted through the plural cross members, thereby enabling crash energy from the side impact load F to be absorbed.

Furthermore, in the present exemplary embodiment, the outer member upper wall 44a is disposed so as to overlap with upper faces of the plural cross members including the first seat cross member 22, and the outer member lower wall 44c is disposed so as to overlap with the lower faces of the plural cross members including the first seat cross member 22.

The high rigidity outer member 44 is accordingly disposed so as to overlap with plural cross members disposed separated from each other in the vehicle front-rear direction. This may enable the side impact load F input substantially along the vehicle width direction to be transmitted efficiently in an axial direction of the plural cross members disposed running along the vehicle width direction, and so a reaction force is obtained efficiently.

Furthermore, in the present exemplary embodiment the inner member upper wall 46a is disposed so as to overlap with the upper faces of the plural cross members including the first seat cross member 22, and the inner member lower wall 46c is disposed so as to overlap with the lower faces of the plural cross members including the first seat cross member 22.

Thereby, not only is the side impact load F transmitted from the outer member 44 able to be transmitted efficiently through the inner member upper wall 46a and the inner member lower wall 46c to the plural cross members, but also the crash energy absorption efficiency from plastic deformation may be raised due to reaction force being obtained efficiently from the plural cross members.

Furthermore, in the present exemplary embodiment the outer member 44 and the inner member 46 are provided to the share panel 40 that is clamped between the rocker outer 32 and the rocker inner 34.

This means that although openings of the outer member 44 and the inner member 46 are deformed by the side impact load F so as to open in the vehicle height direction, such deformation may be suppressed by the tensile strength of the share panel 40.

Furthermore, in the present exemplary embodiment the outer member vertical wall 44b is disposed substantially parallel to the rocker outer upper vertical wall 32b, and the inner member vertical wall 46b is disposed substantially parallel to the rocker inner upper vertical wall 34b.

This means that, in the transmission of the side impact load F from the rocker outer 32 to the outer member 44, load can be borne by the outer member vertical wall 44b as a whole, enabling load to be transmitted in a balanced manner to the outer member upper wall 44a and the outer member lower wall 44c, thereby enabling load transmission efficiency to be raised. Moreover, similarly for the inner member 46, the side impact load F transmitted to the inner member 46 may be transmitted to the rocker inner 34 efficiently.

### Exemplary Embodiment Supplementary Matter

Although in the present exemplary embodiment the plate thickness of the outer member 44 is formed thicker than the plate thickness of the inner member 46, the outer member 44 may be formed from a metal having a higher rigidity than that of the inner member 46. Note that in order to implement the present configuration, a configuration may be adopted in which parameters of the outer member 44 related to rigidity, such as framework width, section modulus, and the like, exceed those of the inner member 46.

Moreover, although in the present exemplary embodiment the vehicle side section member 42 is a member disposed inside the rocker 16 for transmitting side impact load to plural cross members, there is no limitation thereto. For example, a configuration may be adopted in which the rocker outer 32 has a higher rigidity than that of the rocker inner 34 and is disposed so as to overlap with plural cross members. Namely, configuration of the vehicle side section member 42 in the present exemplary embodiment may be provided to the rocker 16.

### Second Exemplary Embodiment

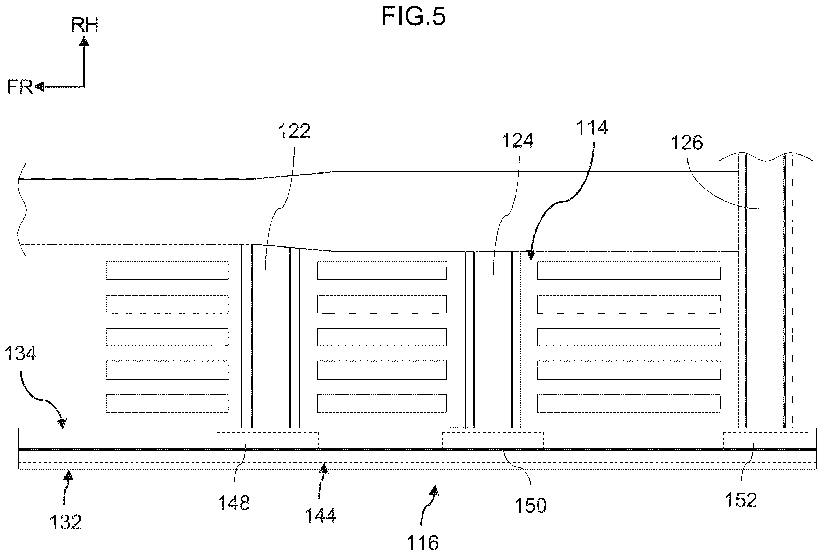

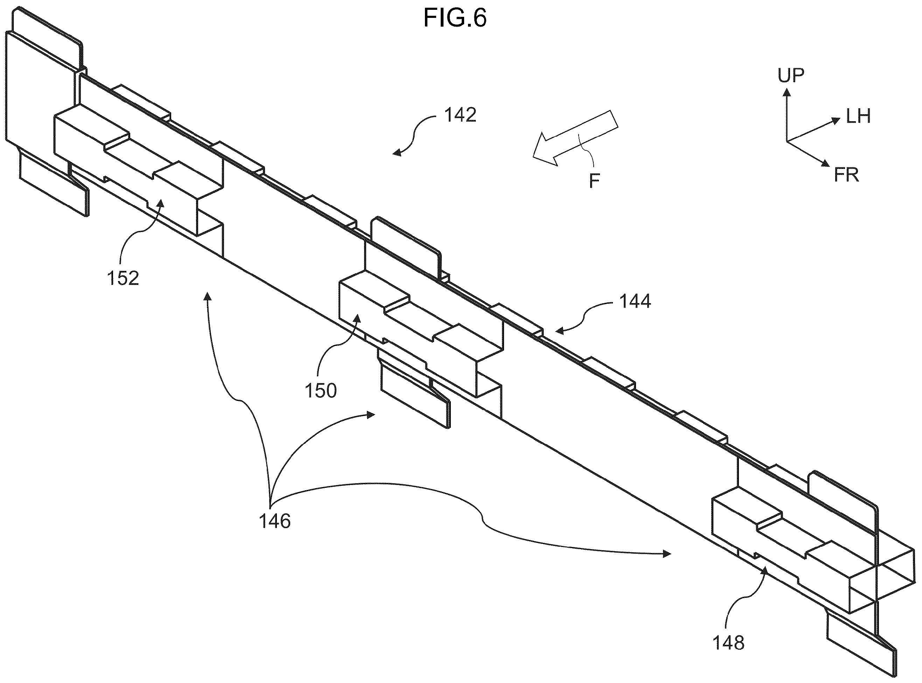

Although description in the first exemplary embodiment above was of a case in which the inner member 46 extends continuously without break along the vehicle front-rear direction, the present embodiment will be described for a case in which the inner member 46 is divided into plural divisions that are disposed separated from each other along the vehicle front-rear direction, as illustrated in Fig. 5 and Fig. 6. Note that description of configuration substantially the same as that of the first exemplary embodiment will be omitted. Moreover, exemplary embodiments applied in the present disclosure are not limited thereto.

As illustrated in Fig. 5 and Fig. 6, in the present exemplary embodiment, an inner member 146 of a vehicle side section member 142 is configured including a first inner member 148 disposed at a vehicle front-rear direction front side and provided so as to overlap with a first seat cross member 122 in vehicle side view, a second inner member 150 disposed at a vehicle front-rear direction rear side of the first inner member 148 and provided so as to overlap with a second seat cross member 124 in vehicle side view, and a third inner member 152 disposed at a vehicle front-rear direction rear side of the second inner member 150 and provided so as to overlap with a floor cross member 126 in vehicle side view.

Due to the plural inner members 148, 150, 152, only being provided at positions overlapping with the plural cross members, residual uncrushed portions of the inner member 146 may be reduced, in cases in which a side impact load F is input between plural cross members, such as in a pole side impact. This may enable the residual uncrushed portions of the inner member 146 to be suppressed from imparting crash load to the battery.

Note that in such cases a rocker outer 132 is preferably set with a higher rigidity than that of a rocker inner 134. This may enable the side impact load F to be transmitted to plural cross members due to the rigidity of the rocker outer 132 even in cases in which the side impact load F is input between plural cross members, and may enable crash load to be suppressed from being imparted to the battery 30.

### Supplements

Note that various appropriate combinations of the following configurations may be employed as a vehicle side section structure according to the present disclosure.

### Configuration 1

A vehicle side section structure including a vehicle side section member provided at a vehicle width direction outside and extending in a vehicle front-rear direction, and plural cross members extending in the vehicle width direction. The vehicle side section member includes, an outer member provided at the vehicle width direction outside, and an inner member provided at the vehicle width direction inside. A rigidity of one member from out of the outer member and the inner member is higher than the rigidity of the other member, and the higher rigidity member of the outer member or the inner member is disposed so as to overlap with the plural cross members in vehicle side view.

### Configuration 2

The lower rigidity member of the outer member or the inner member is disposed so as to overlap with the plural cross members in a vehicle height direction.

### Configuration 3

The outer member has a higher rigidity than the inner member.

### Configuration 4

The vehicle side section member is provided inside each of a left-right pair of rockers that are provided at the vehicle width direction outside and that extend in the vehicle front-rear direction.

### Configuration 5

The rocker includes a rocker outer provided at the vehicle width direction outside, and a rocker inner provided at the vehicle width direction inside. The rocker further includes a partition member provided between the rocker outer and the rocker inner. The outer member is provided to the partition member so as to be disposed between the rocker outer and the partition member, and the inner member is provided to the partition member so as to be disposed between the rocker inner and the partition member.

### Configuration 6

The outer member includes a first projection that extends along the vehicle front-rear direction and that projects toward the vehicle width direction outside, and the first projection is disposed so as to overlap with the plural cross members in vehicle side view.

### Configuration 7

The inner member includes a second projection that extends along the vehicle front-rear direction and that projects toward the vehicle width direction inside, and the second projection is disposed so as to overlap with the plural cross members in vehicle side view.

### Configuration 8

The first projection includes: a first side wall that extends in the vehicle height direction, a first upper wall that extends in the vehicle width direction from an upper end portion of the first side wall, and a first lower wall that extends in the vehicle width direction from a lower end portion of the first side wall. The first upper wall is disposed so as to overlap in the vehicle height direction with upper faces of the plural cross members, and the first lower wall is disposed so as to overlap in the vehicle height direction with lower faces of the plural cross members.

### Configuration 9

The second projection includes: a second side wall that extends in the vehicle height direction, a second upper wall that extends in the vehicle width direction from an upper end portion of the second side wall, and a second lower wall that extends in the vehicle width direction from a lower end portion of the second side wall. The second upper wall is disposed so as to overlap in the vehicle height direction with upper faces of the plural cross members, and the second lower wall is disposed so as to overlap in the vehicle height direction with lower faces of the plural cross members.

### Configuration 10

The first side wall in the first projection extending in the vehicle height direction is disposed substantially parallel to a side wall of the rocker outer opposing in the vehicle width direction, and the second side wall of the second projection is disposed substantially parallel to a side wall of the rocker inner opposing in the vehicle width direction.

### Configuration 11

The first upper wall of the first projection includes an upper projection that projects toward the vehicle height direction upper side, the plural upper projections are provided spaced apart at intervals in the vehicle front-rear direction, the first lower wall of the first projection includes a lower projection that projects toward the vehicle height direction lower side, and the plural lower projections are provided spaced apart at intervals in the vehicle front-rear direction.

### Configuration 12

The upper projections and the lower projections are disposed so as to respectively overlap in the vehicle height direction with each other in vehicle side view.

### Configuration 13

The inner member is configured divided into plural divisions that are disposed separated from each other along the vehicle front-rear direction and are disposed so as to respectively overlap in the vehicle front-rear direction with the plural cross members in vehicle side view.

### Configuration 14

The outer member is configured from a material having a higher rigidity than the inner member.

### Configuration 15

A plate thickness of the outer member is thicker than a plate thickness of the inner member.

Although examples of exemplary embodiments of the present disclosure have been described above, the exemplary embodiments of the present disclosure are not limited thereto, and obviously combinations may be employed of the exemplary embodiments and various modified examples, and various embodiments may be implemented within a range not departing from the spirit of the present disclosure.

## Claims

1. A vehicle side section structure (10) comprising:
a vehicle side section member (44, 46) provided at a vehicle width direction outside and extending in a vehicle front-rear direction; and
a plurality of cross members (20, 22, 24, 26) extending in the vehicle width direction,
the vehicle side section member (44, 46) including:
an outer member (44) provided at the vehicle width direction outside, and
an inner member (46) provided at the vehicle width direction inside,
wherein a rigidity of one member from out of the outer member (44) and the inner member (46) is higher than the rigidity of the other member, and
wherein the higher rigidity member of the outer member (44) or the inner member (46) is disposed so as to overlap with the plurality of cross members (20, 22, 24, 26) in vehicle side view.

2. The vehicle side section structure (10) according to claim 1, wherein the lower rigidity member of the outer member (44) or the inner member (46) is disposed so as to overlap with the plurality of cross members (20, 22, 24, 26) in a vehicle height direction.

3. The vehicle side section structure (10) according to claim 2, wherein the outer member (44) has a higher rigidity than the inner member (46).

4. The vehicle side section structure (10) according to claim 3, wherein the vehicle side section member (44, 46) is provided inside each of a left-right pair of rockers (16) that are provided at the vehicle width direction outside and that extend in the vehicle front-rear direction.

5. The vehicle side section structure (10) according to claim 4, wherein:
the rocker (16) includes:
a rocker outer (32) provided at the vehicle width direction outside, and
a rocker inner (34) provided at the vehicle width direction inside;
the rocker (16) further includes a partition member (40) provided between the rocker outer (32) and the rocker inner (34);
the outer member (44) is provided to the partition member (40) so as to be disposed between the rocker outer (32) and the partition member (40); and
the inner member (46) is provided to the partition member (40) so as to be disposed between the rocker inner (34) and the partition member (40).

6. The vehicle side section structure (10) according to claim 5, wherein:
the outer member (44) includes a first projection (44A) that extends along the vehicle front-rear direction and that projects toward the vehicle width direction outside; and
the first projection (44A) is disposed so as to overlap with the plurality of cross members (20, 22, 24, 26) in vehicle side view.

7. The vehicle side section structure (10) according to claim 6, wherein:
the inner member (46) includes a second projection (46A) that extends along the vehicle front-rear direction and that projects toward the vehicle width direction inside; and
the second projection (46A) is disposed so as to overlap with the plurality of cross members (20, 22, 24, 26) in vehicle side view.

8. The vehicle side section structure (10) according to claim 6, wherein:
the first projection (44A) includes:
a first side wall (44b) that extends in the vehicle height direction,
a first upper wall (44a) that extends in the vehicle width direction from an upper end portion of the first side wall (44b), and
a first lower wall (44c) that extends in the vehicle width direction from a lower end portion of the first side wall (44b);
the first upper wall (44a) is disposed so as to overlap in the vehicle height direction with upper faces of the plurality of cross members (20, 22, 24, 26); and
the first lower wall (44c) is disposed so as to overlap in the vehicle height direction with lower faces of the plurality of cross members (20, 22, 24, 26).

9. The vehicle side section structure (10) according to claim 7, wherein:
the second projection (46A) includes:
a second side wall (46b) that extends in the vehicle height direction,
a second upper wall (46a) that extends in the vehicle width direction from an upper end portion of the second side wall (46b), and
a second lower wall (46c) that extends in the vehicle width direction from a lower end portion of the second side wall (46b);
the second upper wall (46a) is disposed so as to overlap in the vehicle height direction with upper faces of the plurality of cross members (20, 22, 24, 26); and
the second lower wall (46a) is disposed so as to overlap in the vehicle height direction with lower faces of the plurality of cross members (20, 22, 24, 26).

10. The vehicle side section structure (10) according to claim 9, wherein:
the first side wall (44b) in the first projection (44A) extending in the vehicle height direction is disposed substantially parallel to a side wall of the rocker outer (32) opposing in the vehicle width direction; and
the second side wall (46b) of the second projection (46A) is disposed substantially parallel to a side wall of the rocker inner (34) opposing in the vehicle width direction.

11. The vehicle side section structure (10) according to claim 8, wherein:
the first upper wall (44a) of the first projection (44A) includes an upper projection (54) that projects toward the vehicle height direction upper side;
a plurality of the upper projections (54) are provided spaced apart with intervals in the vehicle front-rear direction;
the first lower wall (44c) of the first projection (44A) includes a lower projection (56) that projects toward the vehicle height direction lower side; and
a plurality of the lower projections (56) are provided spaced apart at intervals in the vehicle front-rear direction.

12. The vehicle side section structure (10) according to claim 11, wherein the upper projections (54) and the lower projections (56) are disposed so as to respectively overlap in the vehicle height direction with each other in vehicle side view.

13. The vehicle side section structure (10) according to any one of claim 4 to claim 12, wherein the inner member (46) is configured divided into a plurality of divisions that are disposed separated from each other along the vehicle front-rear direction and are disposed so as to respectively overlap in the vehicle front-rear direction with the plurality of cross members (20, 22, 24, 26) in vehicle side view.

14. The vehicle side section structure (10) according to claim 3, wherein the outer member (44) is configured from a material having a higher rigidity than the inner member (46).

15. The vehicle side section structure (10) according to claim 3, wherein a plate thickness of the outer member (44) is thicker than a plate thickness of the inner member (46).
